# EUROPEAN PATENT APPLICATION

(11) **EP 3 851 211 A1**
(43) Date of publication of application: **21.07.2021**
(21) Application number: 21151599.4
(22) Date of filing: 14.01.2021
(51) Int. Cl.: B05D 1/18, B05D 3/00, B05D 3/12, B05D 7/16, H02B 1/30, H05K 5/04, B05D 1/22, B05D 1/24, B05D 7/22, B05D 7/00, C08G 69/00

(54) **SURFACE COATING OF ELECTRICAL ENCLOSURES**

(30) Priority: 14.01.2020 DK PA202070027
(71) Applicant: Triarca A/S, 8783 Hornsyld (DK)
(72) Inventor: CHRISTIANSEN, Henning, 8700 Horsens (DK); PLADSBJERG, Anette, 7100 Vejle (DK)
(74) Representative: Patrade A/S

(57) **Abstract**

The present invention relates to coating of electrical enclosures (1) for outdoor use in a harsh environment. It is the object of the present invention to provide an electrical enclosure (1) and a method for surface protection of an aluminum electrical enclosure (1), so the aluminum electrical enclosure (1) is protected against harsh environments and electrical conductivity. The present invention addresses this by providing a method to provide a surface protection to an aluminum enclosure (1) using at least one polyamides composition, comprising the following steps:
a) abrasive blasting of said aluminum enclosure (1) or at least part of said aluminum enclosure, thereby providing a predefined roughness to an inner surface (4) and an outer surface (2) of said aluminum enclosure (1) or at least part of said aluminum enclosure (1),
b) heating said polyamides composition to more than a predefined temperature,
c) applying said polyamides composition on to said aluminum enclosure (1) or part of said aluminum enclosure (1),
d) drying said aluminum enclosure (1) or part of said aluminum enclosure (1), where at least one layer of said polyamides composition is applied on the aluminum enclosure (1) or part of said aluminum enclosure (1).

## Description

### Field of the Invention

The present invention relates to coating of electrical enclosures for outdoor use.

### Background of the Invention

Electrical enclosures for outdoor use are used for housing electrical equipment and are often provided with a backboard for mounting the electricals easily. The electrical enclosures come in many different materials, shapes and sizes, all offering different specifications for different sectors and applications. The electrical enclosures may be provided with a higher level of security or higher level of protection against water and dust. The protection level may require protecting the electrical enclosures from environmental impact such as wind, rain, risk of damage, but equally important, issues of pollution, chemical attack, possible electrical interference, and more.

According to the international standard ISO 12944ISO, which is an international standard on corrosion protection of steel structures by protective paint systems, the corrosion class C5M is a durable coating system for a very high corrosive environment, especially for the marine, coastal and offshore areas with high salinity for tidal, splash and atmospheric zones. A corrosive surface layer of high performance polyamides helps the electrical enclosures that are situated in C5M classified environments to stay corrosion free.

Choosing the appropriate material for the electrical enclosure is crucial. For example, choosing between stainless steel and carbon steel will affect not only the rating and the cost of an electrical enclosure, but also the level of protection the electrical enclosure provides. Furthermore, the lifespan and maintenance costs of the electrical enclosure must be taken into consideration too.

Surface treatment of electrical enclosures, such as coating and/or painting for use in outdoor electrical enclosures made of steel and stainless steel, is well known. The treatment of the electrical enclosures is necessary due to corrosion in harsh marine environments and the electrical enclosures must therefore be coated or painted. The requirements for the coating and/or painting are very high because steel and stainless steel have a low corrosion resistance. The electrical enclosure made of steel or stainless steel will easily be exposed to corrosion and chemical attack when being damaged on the surface because of scratches, dents or vandalism. Damaged to an electrical enclosure will be crucial to the protection of the equipment inside, especially when the electrical enclosure is located in a harsh environment.

### Object of the Invention

It is the object of the present invention to provide an electrical enclosure and a method for surface protection of aluminum electrical enclosure, so that the aluminum electrical enclosure is protected against harsh environments and electrical conductivity.

### Description of the Invention

The present invention addresses this by providing a method to provide a surface protection to an aluminum enclosure using at least one polyamides composition, comprising the following steps:
a) abrasive blasting of said aluminum enclosure or at least part of said aluminum enclosure, thereby providing a predefined roughness to an inner surface and an outer surface of said aluminum enclosure or at least part of said aluminum enclosure,
b) heating said polyamides composition to more than a predefined temperature,
c) applying said polyamides composition on to said aluminum enclosure or part of said aluminum enclosure,
d) drying the said aluminum enclosure or part of said aluminum enclosure, where at least one layer of said polyamides composition is applied on the aluminum enclosure or part of said aluminum enclosure.

An electrical enclosure may be intended for usage in a wide range of electrical applications in many branches of industries. For example in usage for technological lines, working machines, power distribution, measurement and regulation and other electrical cabinets etc. Some of the electrical enclosures are often placed in an outdoor environment exposed to the outdoor weather conditions. The electrical enclosure must therefore be protected from harsh environments and electrical conductivity.

If the electrical enclosure, or any other enclosures, is to be as robust and durable as possible and thrive in a C5M environment, an electrical enclosure made from aluminum may be chosen, because the properties of aluminum are known to be corrosion resistant, robust and durable compared to other types of metal, such as steel and stainless steel. The properties of aluminum as a material, and the high-quality material of alloy from which the electrical enclosures are manufactured, may assure a reliability and quality protection in adverse environmental conditions in particular. An even higher reliability and quality protection may be reached by providing one or more surface layer of high performance polyamide composition. An aluminum electrical enclosure, or any other aluminum enclosures other than electrical aluminum enclosures, performs well in harsh environments and is sturdy, capable of withstanding high impact with a high malleable strength. An aluminum electrical enclosure also acts as a shield against electromagnetic interference.
Aabrasive blasting of the surfaces of the aluminum enclosure or parts of the aluminum enclosure provides a predefined roughness to the surfaces of the aluminum electrical enclosure or parts of said aluminum electrical enclosure. Abrasive blasting, more commonly known as sandblasting, is the operation of forcibly propelling a stream of abrasive material against the surface under high pressure to smooth a rough surface, roughen a smooth surface, shape a surface or remove surface contaminants. In this step, the abrasive blasting roughens the surface and/or surfaces of the electrical enclosure.

Surface roughness, often shortened to roughness, relates to the surface structure, for example the surface of the electrical enclosure, both inside and outside the electrical enclosure. The roughness of the surface or surfaces of the aluminum may have an important role in determining how the electrical enclosure will interact with its environment, and also how the surfaces of the electrical enclosure will interact with the polyamides composition. If the surface has a low roughness, almost smooth, the polyamides composition will only interact with a thin layer on the surface. If the surface has a high roughness, opposite smooth, the polyamides composition will interact with a much thicker layer on the surface compared to the smooth surface.

The polyamides composition may have a temperature below the predefined temperature where the polyamides composition is acting as a layer of dry sheet provided on the surface of the electrical enclosure. If the temperature is above the predefined temperature, the polyamides composition may become fluid. The fluent polyamides composition is then ready to be applied on to the aluminium surface or surfaces. In this manner the polyamides reacts like a thermoplastic composition. It shall be understood that the predefined temperature is a temperature or a temperature range equal to or higher than the melting point of the polyamides composition.

The polyamides composition, added to aluminum surface or surfaces on the electrical enclosure, is dried a further polyamides protection layer may be provided, by repeating the method steps c) and d) until the predefined thickness of the lay is reached.

In the long run, choosing a material such as aluminum coated with a polyamides composition for the electrical enclosure will reduce the cost of an electrical enclosure compared to choosing stainless steel. Also, the high level of protection of the electrical enclosure is provided, including a long durable lifespan and low maintenance costs, when the electrical enclosure is located in harsh environments.

In an advantageous embodiment of the invention, said polyamides composition is heated in a vessel to more than a predefined temperature, arranging said aluminum enclosure or part of said aluminum enclosure in said vessel covering the said aluminum enclosure or part of said aluminum enclosure with a polyamides composition, removing the said aluminum enclosure or said part of aluminum enclosure from the vessel, and drying the said aluminum enclosure or part of said aluminum enclosure, where at least one layer of polyamides composition is applied on said aluminum enclosure or part of said aluminum enclosure.

One way of providing the polyamides composition onto the aluminum enclosure is to immerse the enclosure into a vessel comprising the fluent polyamides composition. The aluminum enclosure or the part of aluminum enclosure is lowered into the vessel so the polyamides composition may cover the aluminum enclosure partially or wholly. The polyamides composition may for example be added by dipping said aluminum enclosure or part of said aluminum enclosure into fluidized polyamides composition powder. When the aluminum enclosure or part of aluminum enclosure has stayed in the vessel for a predefined time, i.e. enough time for the polyamides composition to attach to the aluminum enclosure, the aluminum enclosure or part of aluminum enclosure is lifted up and away from the vessel. When the enclosure is lifted away from the preheated polyamides composition to dry, the temperature of the polyamides composition which is binding to the aluminum is reduced. The polyamides composition becomes substantially solid and non-fluent. The resiliency of the polyamides depends on the composition of the polyamides mixture.

In a further advantageous embodiment of the invention, the abrasive blasting is a sandblasting process.

There are several variants of the abrasive blasting process, using various media; some are highly abrasive, whereas others are less abrasive. Most abrasive blasting processes are shot blasting processes, such as sandblasting, using different media depending on the task. Sandblasting is an extremely useful procedure in a broad array of applications and industries. Many media exist because they each perform different tasks extremely well. This is due to a number of key abrasive properties of the medium: shape, mesh size, hardness and density.

One important result of sandblasting is what is called the anchor pattern. When a particle impacts the surface of a metal, it forms a small crater. This tiny crater will be lined by ridges, which are pressed up on all sides of the crater. The depth of this crater affects how well the polyamides composition will bond to the surface of the aluminum. The deeper the craters, the better the bond is between the aluminum surface and the polyamides composition. However, if the craters are too deep, the ridges may poke out through the surface of the coating, which is not preferable. This can cause rusting and weakness in the coating, which means another round of sandblasting. The depth of the crater must be taken into consideration when choosing the media and predefined blasting activity on an aluminum surface.

In a still further advantageous embodiment of the invention, the predefined temperature is equal to or higher than the melting point of said polyamides composition.

The polyamides composition may have a working temperature where the polyamides composition is substantially solid and non-fluent. The resiliency of the polyamides depends on the composition of the polyamides mixture. When the polyamides composition has a temperature within the working temperature, the polyamides composition forms a protection layer on the surface of the electrical enclosure.

When the temperature of the polyamides composition is above the working temperature, the polyamides composition may become fluid when the temperature reaches the melting point of the polyamides composition. When the polyamides composition is heated to a predefined temperature equal to or above the melting point of the polyamides composition, the fluent polyamides composition is ready to be applied on to the aluminum surface or surfaces. In this aspect the polyamide composition acts as a thermoplastic composition.

In a further advantageous embodiment of the invention, said polyamides composition is a polyamide 11 resin.

The polyamides composition may be a polyamide 11 (PA 11) resin or a composition comprising polyamide 11 resin. Polyamide 11 is a polyamide, bioplastic and a member of the nylon family of polymers produced by the polymerization of 11-aminoundecanoic acid. Polyamide 11, sometimes referred to as Nylon 11, is a non-biodegradable, polyamide bioplastic which is derived from vegetable oil. It is produced from castor beans by Arkema under the trade name Rilsan®.

Rilsan® polyamide 11, which is an 11-carbon chain, yields a specific crystallinity profile that is very high in hydrogen bond density. This contributes to a higher melt point, lower fuel and gas permeability, and improved impact properties compared to the polyamide12. Polyamide 11 typically is flexible and stable and comprises better impact properties compared to typical short chain polyamides.

Rilsan® polyamide11 may be preferred as a polyamides composition for a protection layer on the electrical enclosure. The polyamide11 matrix accommodates countless additives and filling agents, such as plasticizers, stabilizers, colorants, lubricants, impact modifiers, glass fiber, carbon fiber etc. Polyamide 11 has a wide range of working temperature of -40° C to +130° C.

A further advantageous method of the invention comprises the step of adding pre-coating surface treatment on said aluminium enclosure or part of said aluminium enclosure after the step a) abrasive blasting.

The pre-coating surface treatment provides a material layer on the surface of the aluminium enclosure or part of said aluminum, such that the polyamides composition is added more efficiently to the aluminum enclosure. The pre-coating material may be a binder. The pre-coating material may be sprayed onto the surface of the aluminium enclosure or part of the aluminium enclosure. The pre-coating surface treatment on the aluminium enclosure or part of the aluminium enclosure is preferably performed after the step of abrasive blasting the aluminium enclosure or part of the aluminium enclosure.

The pre-coating material may for example be added by dipping said aluminum enclosure or part of said aluminum enclosure into fluidized pre-coating material, which may be provided in a vessel comprising pre-coating.

Afterwards, the polyamides composition may for example be added by dipping said aluminum enclosure or part of said aluminum enclosure into fluidized polyamides composition in a vessel comprising polyamides composition. The polyamides composition may be a fluidized polyamides composition powder.

A further advantageous method of the invention comprises the step of heating said aluminium enclosure or part of said aluminium enclosure to a predefined enclosure treatment temperature.

The step of heating said aluminium enclosure or part of said aluminium enclosure to a first predefined enclosure treatment temperature, before the pre-coating material is provided on the surface. Alternatively, the step of heating said aluminium enclosure or part of said aluminium enclosure to a second predefined enclosure treatment temperature, before providing the polyamides composition to the surface. Alternatively, the step of heating said aluminium enclosure or part of said aluminium enclosure to a second predefined enclosure treatment temperature, before providing the polyamides composition to the surface, and after providing the pre-coating material to the surface of the enclosure. The first and second predefined enclosure treatment temperature may be the same temperature. Alternatively, the first and second predefined enclosure treatment temperature may be different temperature.
An aluminum enclosure, where said aluminum enclosure or part of said aluminum enclosure having an outer surface and an inner surface, where the outer surface and/or the inner surface is covered with at least one layer of polyamides composition in a predefined thickness of said layer.

The purpose is to ensure that the electrical enclosure protects the electrical and electronic equipment, so the electrical and electronic equipment continue working reliably for years and years under adverse ambient conditions, even though the electrical enclosures is exposed to the harsh outdoor weather conditions. The electrical enclosure may be an aluminum enclosure, which comprises electrical isolation properties. The electrical conductivity is reduced when providing the surface of the aluminum enclosure with polyamides composition layers. Aluminum and its alloys have excellent resistance to corrosion and chemical. The resistance is increased by providing the surface of the aluminum enclosure with polyamides composition layers. The aluminum enclosure does not corrode under some harsh conditions as steel based enclosures do. The aluminum enclosure is therefore not so exposed to corrosion and chemical attack when being damaged because of scratches, dents and/or vandalism.

It is still preferable and also necessary to avoid corrosion and chemical attack on the aluminum enclosures. Through appropriate alloy choice and geometric design of the enclosure, and when the enclosure is provided with a surface layer of a polyamides composition, the electrical enclosure is provided with an optimal protection and immunity against corrosion and chemical attack. This is especially needed when the electrical enclosure is situated in coastal and marine areas with high salinity.

In an advantageous embodiment of the invention, said polyamides composition is a polyamide 11 resin.

Rilsan® polyamide 11 has a wide range of working temperature of -40° C to +130° C, and therefore a high melting point, for example at 180-190°C . A polyamide 11 composition is flexible and stable, and easy to bond to the aluminum surface. The Rilsan® polyamide 11 provides a high protection from harsh environments, such as a C5M environment.

Rilsan® polyamide 11 has a wide range of properties, which makes the Rilsan® polyamide 11 preferable to use as a protection layer. For example the polyamide 11 has the lowest water absorption of all commercially available polyamides. The polyamide 11 has also outstanding impact strength, even at temperatures well below the freezing point. The polyamide 11 is very resistant to chemicals, particularly against greases, fuels, common solvents and salt solutions. Also the polyamide 11 has an outstanding resistance to stress cracking, aging and abrasions. The polyamide 11 provides a low coefficient of friction and noise and vibration damping properties. Furthermore the polyamide 11 is highly resistant to ionization radiation.

Several properties of polyamide 11 are similar to polyamide 12. Both polyamide 11 and polyamide 12 are linear, semi-crystalline thermoplastics, polyamide 11 is a bio plastic polyamide and is derived from this made out of renewable resources that come from vegetable and/or castor oil. Polyamide 12 is a synthetic power cultivated from petroleum materials. Polyamide 12 has a slightly lower melting point and density. The polyamide 12 could be chosen as an alternative to polyamide 11, although polyamide 11 is a more environmentally friendly choice which also has better thermal stability, greater resistance to light and UV, and a good elasticity.

The polyamide 11, and the polyamide 12, comparatively offers superior thermal and U.V resistance, low water absorption and lower environmental impact. However, polyamide 11 has a lower environmental impact, consumes less non-renewable resources to be produced and has superior thermal resistance. A polyamide 11 protection layer provides a good impact strength and stability in a C5M environment.

Polyamide 11 and other polyamides can be challenging to bind to an aluminum surface. The abrasive blasting roughens the surface, such that the aluminium surface has a substantially uniform roughness. A pre-treatment of the aluminum surface can provide a more robust and uniform binding to the surface of an aluminium electrical enclosure. If the surface has a low roughness, almost smooth, the polyamides composition will only interact with a thin layer on the surface. The risk of for example cracks increases if the layer is too thin. If the surface has a high roughness, opposite smooth, the polyamides composition will interact with a much thicker layer on the surface compared to the smooth surface. It is preferred that the pre-treatment of the surface roughness provides a substantially uniform thickness of the polyamides composition layer having a predefined thickness, also after the drying process. Having a more uniform polyamides composition layer will increase the resistance to stress cracking, aging and abrasions and the maintenance costs will be reduced significantly over time.

The melting point of polyamide 11 is around 180-190°C. The melting point of polyamide 12 is around 175-180°C, and the melting point of polyamide 6 or 6,10 is higher than 215°C.

The invention has now been explained with reference to a few embodiments which have only been discussed in order to illustrate the many possibilities and varying design possibilities achievable with isolating an aluminium electrical enclosure or any aluminum enclosure, and the benefits thereof, according to the present invention.

### Description of the Drawing

The embodiments of the invention are described in the following with reference to:
Fig. 1: Illustrating an embodiment of an electrical enclosure.
Fig. 2: Illustrating a cross-sectional view of a coated aluminum part.

### Detailed Description of the Invention

An embodiment of the invention is explained in the following detailed description. It is to be understood that the invention is not limited in its scope to the following description or illustrated in the drawings. The invention is capable of other embodiments and of being practiced or carried out in various ways. The embodiment of the invention is explained based on an electrical enclosure which is to be as robust and durable as possible and thrive in a C5M environment. The embodiment of the invention may as well have been explained based on any aluminum enclosure which is to be as robust and durable as possible and thrive in a C5M environment.

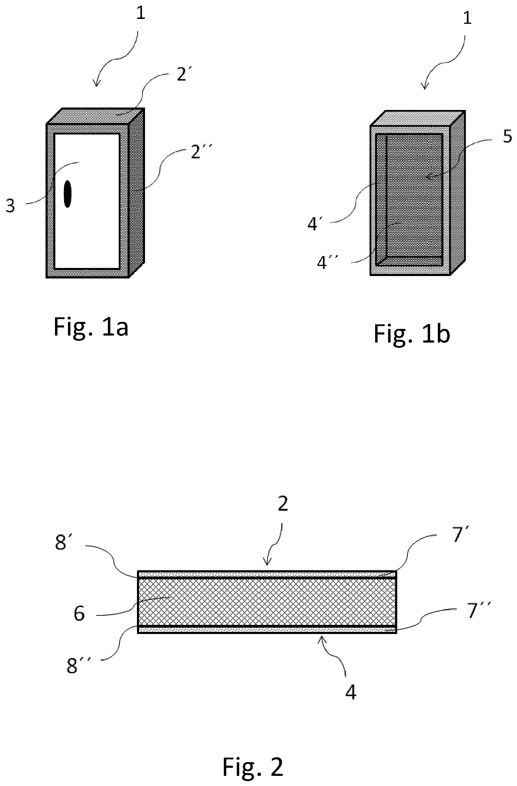

Fig. 1a and fig. 1b illustrate an embodiment of an electrical enclosure 1. An electrical enclosure 1 is a cabinet for hosting for example electrical or electronic equipment mainly used for mounting switches, knobs and displays, and to prevent electrical shock to equipment users and protect the contents from the environment. Aluminum and/or aluminum alloys are chosen because of the light weight, relative strength, low cost, and corrosion resistance. Aluminum alloys may have a wide range of properties, where the aluminum alloy or alloys are used in engineering an electrical enclosure. Aluminum alloys are alloys in which aluminum is the predominant metal. The typical alloying elements may be copper, magnesium, manganese, silicon, tin and zinc. The Aluminum alloys may have different specifications and properties divided into different classification and classes and chosen from such.

The electrical enclosure 1 is made wholly or partly of aluminum parts. The door leading into the/an electrical enclosure 1 may also be aluminum. An inner volume 5 is defined by the inner surfaces 4. When aluminum is exposed to air a layer of aluminum oxide forms almost instantaneously on the surface of aluminum parts, and provides an excellent resistance to corrosion. The electrical enclosure 1 is then fairly resistant to most acids, but less resistant to alkalis.

To provide a surface which is capable to withstand the challenges of a C5M environment, a polyamides composition is provided on the outer surface 2 and inner surface 4 of the electrical enclosure or part of the electrical enclosure 1, and the door 3 as well.

The polyamides composition provides the electrical enclosure protection and electrical isolation from and to the surroundings. To prepare the electrical enclosure 1 for the treatment of coating, the surfaces 2, 4 of electrical enclosure 1 or part of the electrical enclosure 1 is blast using abrasive blasting. The inner surfaces 4',4" and the outer surface surfaces 2',2" are provided with a predefined roughness.

The polyamides composition is poured into a vessel and heated to a predefined temperature. The predefined temperature is equal to or higher than the melting point of said polyamides composition. The melting point of the solid polyamides composition is the same as the freezing point of the liquid polyamides composition. At that temperature, the solid and liquid states of the substance are in equilibrium. The electrical enclosure 1 or parts of the electrical enclosure 1 may be preheated to substantially the same temperature as the temperature of the polyamides composition in the vessel. The electrical enclosure 1 or parts of the electrical enclosure 1 is then placed inside the vessel surrounded with the polyamides composition. The polyamides composition then covers the entire inside and outside of the electrical enclosure 1. Furthermore, the polyamides composition coating on the electrical enclosure may easily be repaired on site during maintenance.

After the electrical enclosure 1 or part of the electrical enclosure 1 has been obtained in the vessel for a predefined period of time ensuring the polyamides composition has been interacting with the surfaces of the electrical enclosure 1 or part of the electrical enclosure 1, the electrical enclosure 1 or part of the electrical enclosure 1 is removed from the vessel. When the coated electrical enclosure 1 or part of the electrical enclosure 1 is removed from the vessel, the temperature of the coated electrical enclosure 1 or part of the electrical enclosure 1 is reduced over time. When the temperature reaches the freezing point and transforms the polyamides composition from a fluid phase to a solid phase material, the polyamides composition becomes dry. The coated electrical enclosure 1 or part of the electrical enclosure 1 may be lowered into the vessel again, to provide a thicker layer of polyamides composition to the surfaces 2,4. Multiple layers of polyamides composition may be applied on the electrical enclosure 1 or part of the electrical enclosure 1, providing as high robustness and durability as possible, thereby protecting the electrical enclosure 1 against a harsh environment and reducing the electrical conductivity at the same time.

Fig. 2 illustrates a cross-sectional view of a coated aluminum part 6. The aluminum part has an outer surface 2 and an inner surface 4, where the outer surface 2 and/or the inner surface 4 is covered on each surface 2,4 side with at least one layer of polyamides composition 7', 7" in a predefined thickness of said layer in relation to the aluminum part 6. The polyamides composition is a polyamide 11 resin. The polyamides composition may for example be added by dipping said aluminum enclosure or part of said aluminum enclosure into fluidized polyamides composition powder

The surface structure 8 , 8" between surface 2,4 of the aluminum part and the layer of polyamides composition 7', 7" is a transition between the aluminum and the polyamides composition. A surface roughness is related to the surface structure 8, 8". Abrasive blasting such as sandblasting uses pressurized air to hurtle a beam of tiny projectiles, which range of blast media from walnut shells to glass beads and tiny rock particulates. Round particles are less abrasive than coarse ones. The sharpness of angles in a particle determines how deeply it will cut into the aluminum part 6. A sharp particle will dig farther into the aluminum surface 2,4 than a round particle of the same size. The roughness of the surface 2,4 of the aluminum part has an important role in the interaction with the polyamides composition. The surface 2,4 has a roughness provided by the abrasive blasting.

## Claims

1. Method for protection and isolation of an aluminum electrical enclosure capable of being in a C5M environment, using at least one polyamides composition (7', 7"), comprising the following steps:
a) abrasive blasting of said aluminum electrical enclosure (1) or at least part of said aluminum electrical enclosure (1), thereby providing a predefined roughness to an inner surface (4) and an outer surface (2) of said aluminum electrical enclosure (1) or at least part of said aluminum enclosure (1),
b) heating said polyamides composition (7', 7") to more than a predefined temperature,
c) applying said polyamides composition (7', 7") on to said aluminum electrical enclosure (1) or part of said aluminum electrical enclosure (1),
d) drying said aluminum electrical enclosure (1) or part of said aluminum enclosure (1), where at least one layer of said polyamides composition (7', 7") is applied on the aluminum electrical enclosure (1) or part of said aluminum enclosure (1).
wherein said at least one polyamides composition (7', 7") is a polyamide 11 resin.

2. Method according to claim 1 comprising the steps of:
- heating said polyamides composition (7', 7") is heated in a vessel to more than a predefined temperature,
- arranging said aluminium electrical enclosure (1) or part of said aluminium electrical enclosure (1) in said vessel covering said aluminum electrical enclosure or part of said aluminum electrical enclosure with a polyamides composition (7', 7"),
- removing said aluminum electrical enclosure (1) or part of said aluminum electrical enclosure (1) from the vessel, and
- drying the said aluminum electrical enclosure (1) or part of aluminum electrical enclosure (1),
where at least one layer of polyamides composition (7', 7") is applied on said aluminium electrical enclosure (1) or part of said aluminum electrical enclosure (1).

3. Method according to claim 1 or 2, where the abrasive blasting is a sandblasting process.

4. Method according to claim 1, 2 or 3, where the predefined temperature is equal to or higher than the melting point of said polyamides composition (7', 7").

5. Method according to any one of the preceding claims, comprising the step of adding pre-coating surface treatment on said aluminium enclosure (1) or part of said aluminium enclosure (1) after step a) abrasive blasting.

6. Method according to any one of the preceding claims, comprising the step of heating said aluminium enclosure (1) or part of said aluminium enclosure (1) to a predefined enclosure treatment temperature.

7. An aluminium electrical enclosure for a C5M environment installation, where said aluminum electrical enclosure or part of said aluminium electrical enclosure has an outer surface (2) and an inner surface (4), where the outer surface and/or the inner surface is covered with at least one layer of polyamides composition (7', 7") in a predefined thickness of said layer,
wherein said at least one layer of polyamides composition (7', 7") is a polyamide 11 resin.
